Europäisches Patentamt

European Patent Office

Office européen des brevets

(19)

(11) Veröffentlichungsnummer: **0 359 027 B1**

(12) **EUROPÄISCHE PATENTSCHRIFT**

(45) Veröffentlichungstag der Patentschrift: **27.10.93**

(21) Anmeldenummer: **89115950.1**

(22) Anmeldetag: **30.08.89**

(51) Int. Cl.⁵: **H02J 9/08**, H02J 3/30, H02K 7/02

(54) **Sofortbereitschaftsaggregat für eine dynamische, unterbrechungsfreie Stromversorgung.**

(30) Priorität: **31.08.88 DE 3829457**

(43) Veröffentlichungstag der Anmeldung:
**21.03.90 Patentblatt 90/12**

(45) Bekanntmachung des Hinweises auf die
Patenterteilung:
**27.10.93 Patentblatt 93/43**

(84) Benannte Vertragsstaaten:
**AT BE DE GB IT NL**

(56) Entgegenhaltungen:
**DE-A- 1 765 958**
**DE-B- 1 944 663**

(73) Patentinhaber: **Ad. Strüver KG (GmbH & Co.)**
**Niendorfer Weg 11**
**D-22453 Hamburg(DE)**

(72) Erfinder: **Wockenfuss, Hans Jürgen**
**Wesselyring 39**
**D-2000 Hamburg 60(DE)**

(74) Vertreter: **Nau, Walter, Dipl.-Ing.**
**Johann-Pullem-Strasse 8**
**D-50999 Köln (DE)**

## Beschreibung

Die Erfindung betrifft ein Elektroaggregat nach dem Oberbegriff des Anspruchs 1.

Der nächstliegende Stand der Technik ist aus der DE-A-1944663 bekannt. Dieses Dokument zeigt ein Elektroaggregat, das als Sofortbereitschaftsaggregat ausgelegt ist und unter anderem aus einem Generator und einem Generatorantriebsmotor besteht, sowie ein als Energiespeicher dienendes separat ständig angetriebenes umlaufendes Schwungradsystem aufweist. Dabei ist das Schwungradsystem durch eine Schaltkupplung mit dem Gnerator bzw. dem Generatorantriebsmotor verbindbar. Weiterhin geht aus diesem Dokument hervor, daß das Schwungradsystem mit einer höheren Drehzahl als die des Generators bzw. des Generatorantriebsmotors umläuft.

Da Unregelmäßigkeit im öffentlichen Netzverbundsystem unvermeidbar sind, bedarf es für einige Abnehmergruppen, wie z. B. Intensivbehandlungsräume in Krankenhäusern, EDV-Zentralen etc., für die bereits eine kurze Netzunterbrechung unzulässig und auch Spannungs- oder Frequenzabweichungen zu vermeiden sind, besondere Vorkehrungen zur Aufrechterhaltung einer Notversorgung im Ernstfall. Dazu sind sogenannte Sofortbereitschaftsaggregate geeignet, die geringste Netzschwankungen ausgleichen und eine nahezu konstante Frequenz sicherstellen und in Ernstfall die Versorgung eines örtlich begrenzten Netzes aufrecht erhalten.

Aus einer französischen Veröffentlichung aus dem Jahre 1956:

Energie èlectrique de sècurité,
Extrait den Publications de l'Association des Ingènieurs de la Faculté Polytechnique de Mons 1er Fasciule,
ist eine Notstrom-Aggregat mit sofortiger Wirksamkeit für konstante Frequenz und Spannung während einer Übergangszeit zu entnehmen. Aus dem bekannten Stand der Technik geht ein Aggregataufbau hervor, bei dem unter normalen Bedingungen die Synchron-Umkehrmaschine vom Netz gespeist als Motor läuft und separat dazu ein Asynchron- und Kollektormotor vorgesehen ist, der ein Schwungrad mit einer höheren Drehzahl als die des Generators antreibt. Eine zwischen dem Schwungrad und der Synchron-Umkehrmaschine vorgesehene Schaltkupplung ist bei Nennbetrieb geöffnet.

Im Störungsfall wird die Kupplung zwischen Schwungrad und Synchron-Umkehrmaschine geschlossen zur Übertragung der Energie des Schwungrades auf die Synchron-Umkehrmaschine und zur Aufrechterhaltung des Antriebs, bis die Lastübernahme durch den Verbrennungsmotor erfolgen kann.

Dieser bekannte Aufbau erlaubt keine steuerbare Energieübertragung vom Energiespeicher auf den Generatorantrieb, da die Kupplung keine dosiert, regelbare Energieübertragung vom Schwungrad auf den Generatorantrieb erlaubt. Die Schaltkupplung gestattet lediglich eine taktweise Betätigung, wodurch keine gleichbleibende, d. h. kein schmales Frequenzband erreichende Energiewandlung erzielbar ist.

Weiter sind der als Reibungskupplung ausgelegten Schaltkupplung Grenzen gesetzt bei der Energie- bzw. Drehmomentübertragung. Somit muß unbedingt eine Abstimmung zwischen der Überschußenergie im Schwungrad und der Kupplungsauslegung erfolgen, damit es nicht zu einer Überbeanspruchung der Schaltkupplung und einem evtl. Ausfall kommt.

Der Erfindung liegt daher die Aufgabe zugrunde, bei der Übertragung der gespeicherten Energie auf den Generator bzw. Generatorantrieb für eine mit dem Normalbetrieb des Generators übereinstimmende Frequenz zu sorgen und im Bedarfsfall die gesamte Speicherenergie zur Aufrechterhaltung der vorgegebenen Frequenz auf den Antrieb des Stromerzeugers erfolgen kann.

Erfindungsgemäß wird die Aufgabe durch die kennzeichnenden Merkmale des Anspruchs 1 gelöst.

Das erfindungsgemäße Sofortbereitschaftsaggregat macht sich einen bekannten physikalischen Zusammenhang zunutze. Nach der Beziehung:

$$E \sim J \cdot (n_1^2 - n_2^2)$$

$E$ = Kinetische Energie
$J$ = Trägheitsmoment des Schwungrades
$n_1$ = Anfangsdrehzahl
$n_2$ = Enddrehzahl

ist der rücklieferbare Energieteil eines Schwungrades proportial dem Trägheitsmoment desselben multipliziert mit der Differenz des Quadrats der Anfangsdrehzahl zur Enddrehzahl.

Bei einem bestimmten benötigten Energieinhalt werden also kleine Abmessungen und hiermit kleines Gewicht des Schwungrades erzielt, wenn das Schwungrad hohe Drehzahlen läuft und die zulässige Drehzahlabsenkung von $n_1$ auf $n_2$ möglichst groß ist.!

Diese Beziehung berücksichtigend sieht der erfindungsgemäße Aufbau des Sofortbereitschaftsaggregates vor, daß die als Energiespeicher dienenden Schwungradsysteme mit einer weit höheren Drehzahl umlaufen als die Drehzahl des Generators.

Darüber hinaus wird mit Hilfe einer Schaltkupplung aus dem nicht mit der Welle des Generators gekoppelten Schwungradsystem, unter Ausnutzung der vollen Drehzahlabsenkung auf die Drehzahl des Generators, eine max. mögliche kinetische Energie entnommen.

In einer Ausgestaltung der Erfindung ist vorgesehen, daß als Schaltkupplung eine spezielle Induktionskupplung dient, durch die berührungslos, die in einer Flucht auf zwei getrennten Wellen angeordneten Läufer gekuppelt werden. Besonders hervorzuheben ist, daß durch eine solche Kupplung vorteilhaft ein ideal regelbarer Kraftfluß zweier drehender Komponenten (Wellen) möglich wird. Diese Kupplung gestattet eine Energieübertragung vom hochtourig laufenden Schwungradsystem über eine längeren Zeitraum auf die, mit einer geringeren Drehzahl umlaufende Welle der Synchron-Umkehrmaschine. Das erlaubt einen steuerbaren Energiefluß bei Einhaltung einer vorgegebenen Frequenz bis zu einer Frequenzbandbreite von ± 1 % für eine unterbrechungsfreie Stromversorgung. Folglich ist dadurch für einen längeren Zeitraum die Möglichkeit gegeben, durch das Sofortbereitschaftsaggregat eine nahezu konstante Spannung ohne nennenswerten Frequenzeinbruch zu liefern, bis zur Lastübernahme durch den Dieselmotor. Die Induktionskupplung selber sieht zwei radial zueinander angeordnete unabhängige Läufer vor. Der Aufbau der Kupplung gestattet vorteilhaft eine Übertragung der gesamten gespeicherten Energie auf den Generatorantrieb, da der Kraftfluß zwischen den beiden Läufern der Induktionskupplung berührungslos erfolgt und folglich keine mechanische Überbeanspruchung der Kupplung besteht. Außerdem erlaubt die Verwendung dieser erfindungsgemäßen Induktionskupplung eine weit höhere Speicherenergie in Form von Schwungradsystemen, als die für den Antrieb des Generators erforderlich ist, um so, bedingt durch das größere gespeicherte Energievolumen, für einen größeren Zeitabschnitt genügend Antriebsenergie zu besitzen für den Generator bis zur Lastübernahme durch den Dieselmotor. Zur Verbesserung der Induktion sieht die Erfindung weiter vor, daß die Läuferanordnung so gewählt ist, daß ein Läufer vom Gegenläufer radial berührungslos umschlossen wird. Die Induktionskupplung, durch die im Bedarfsfall die gespeicherte Energie übertragen wird, hat folglich neben der Energieübertragung durch Kopplung der Läufer mit Hilfe eines Induktionsstromes die Aufgabe, bei Netzausfall des Generatorantriebs für eine Frequenzregelung zu sorgen. Hierzu bietet sich beispielsweise eine mit der Kupplung angeordnete elektronische Regelung an. Durch eine gewisse Vorerregung der Induktionskupplung wird erreicht, daß bei Bedarf eine möglichst kurzfristige, d. h. im Bereich von Millisekunden erreichbare Übertragung der gesamten Energie auf den Generatorantrieb erzielbar ist. Die Drehzahl läßt sich somit ideal regeln an eine vorgegebene Frequenz. Weiter läßt sich dadurch die Einhaltung eines festen Drehzahlverhältnisses bei Normalbetrieb zwischen den Schwungradsystemen erreichen.

Der Erfindungsgedanke sieht darüber hinaus vor, daß das Schwungradsystem, welches ständig mit der Synchron-Umkehrmaschine in Verbindung steht, innerhalb eines Getriebes angeordnet ist und in diesem ins Schnelle, d. h. auf eine höhere Drehzahl übersetzt wird. Durch das Getriebe ergibt sich vorteilhaft die Möglichkeit, die gesamte Baulänge des Aggregats zu verkürzen sowie das Bauvolumen und das Gewicht zu reduzieren aufgrund der hochtourig umlaufenden, mit einem relativ geringen Gewicht versehenen Schwungradsysteme. Das Getriebe ist vorteilhaft dabei so aufgebaut, daß um ein mittiges Zentralzahnrad im Bedarfsfall mehrere Schwungradsystem beispielsweise sternförmig angeordnet werden können.

Zur Unterstützung der kompakten Bauart der Speicherkomponenten des Sofortbereitschaftsaggregates ist an eine konstruktive Ausbildung gedacht, bei der aus dem Getriebe Ausgangswellen geführt sind, die innerhalb des Getriebes mit dem Zentralrad in Verbindung stehen und endseitig einen Läufer der Induktionskupplung aufnehmen, über den im Bedarfsfall bei Ausfall des Netzes die Übertragung der kinetischen Energie des separat angetriebenen Schwungradsystems auf die Synchron-Umkehrmaschine erfolgen kann. Wie bereits zuvor im Zusammenhang mit dem im Getriebe angeordneten Schwungradsystemen ausgeführt, bietet sich auch hier die Möglichkeit an, nahezu beliebig viele Schwungradsysteme, einschließlich einer als Induktionskupplung ausgebildeten Schaltkupplung kreisförmig um die Längsachse des Sofortbereitschaftsaggregates anzuordnen.

Als separater Antrieb des Schwungradsystems bietet sich vorteilhaft ein mit zentral, mittig angeordneter Elektromotor an, von dem aus durch einen Riemen- bzw. Rädertrieb der hochtourige Antrieb erfolgt. Alternativ dazu ist ebenfalls eine Kombination von einzelnen Elektromotoren mit jeweils einem einzelnenen Schwungrad denkbar.

In einer weiteren konstruktiven Ausgestaltung der Erfindung ist daran gedacht, zur Erreichung einer möglichst kurzen Baulänge des Aggregats das separat angetriebene Schwungradsystem fliegend zu lagern. Beispielsweise kann diese Gestaltung realisiert werden in Verbindung mit unmittelbar auf der Welle des Elektromotors in kurzem Abstand dazu angeordneten Schwungradsystemen, vorteilhaft durch eine jeweils zu einer Einheit - Elektromotor und Schwungrad - zusammengefügten Kombination.

Zur Erreichung einer hochtourigen Umlaufdrehzahl der Energiespeicher ist daran gedacht, daß die Drehzahl der separat angetriebenen Schwungradsystems mehr als doppelt so hoch wie die der Synchron-Umkehrmaschine ausgelegt ist und daß das Drehzahlverhältnis zwischen dem starr angetriebenen mit dem Generatorantrieb verbundenen Schwungradsystem und der Synchronumkehrmaschine 5:1 beträgt. Damit sind hohe Differenzdrehzahlen zu realisieren und damit eine möglichst lang andauernde Energieübertragung bei gleichzeitig verbessertem Wirkungsgrad.

Ein Ausführungsbeispiel zur weiteren Erläuterung der Erfindung ist in den Zeichnungen dargestellt und wird im folgenden näher beschrieben.

Es zeigt:

Fig. 1: bekanntes Sofortbereitschaftsaggregat zur unterbrechungsfreien Stromversorgung (USV),

Fig. 2: Aufbau der erfindungsgemäßen USV,

Fig. 3: schematisch dargestellte Zusammenfügung der Systemkomponenten,

Fig. 4: maschinenbaulicher Aufbau der erfindungsgemäßen unterbrechungsfreien Stromversorgung.

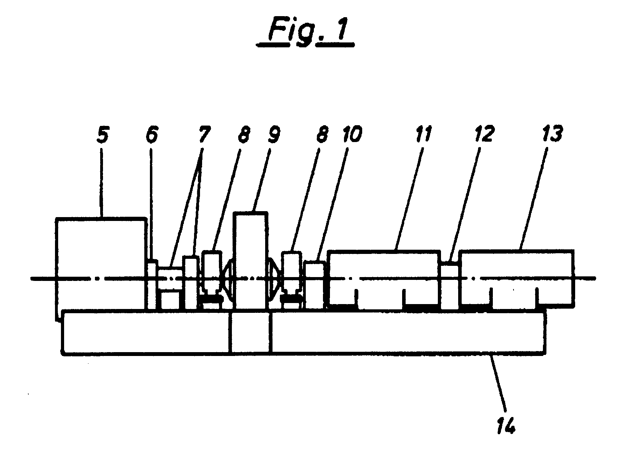

Die Figur 1 zeigt ein herkömmlich aufgebautes Sofortbereitschaftsaggregat, bei dem in einer Achse fluchtend alle Einzelkomponenten auf dem Grundrahmen 14 angeordnet sind. Der Aufbau zeichnet sich durch eine große ständig mitlaufende Schwungmasse 9 aus, die beiderseits mit Lagern 8 versehen ist und im Normalfall vom Elektromotor 11 über die elastische Kupplung 10 angetrieben wird. Auf der von der Schwungmasse 9 gegenüberliegenden Seite des Elektromotors 11 ist über die elastische Kupplung 12 der Elektromotor 11 mit dem Generator 13 verbunden. Bei einem Spannungseinbruch wird der Dieselmotor 5 automatisch gestartet in Abhängigkeit einer vorgegebenen Frequenzabweichung und sorgt für den erforderlichen Antrieb des Generators 13. Bis zur Lastübernahme des Dieselmotors 5 sorgt die große mitlaufende Schwungmasse 9 dafür, daß es nicht zu einem völligen Spannungseinbruch kommt. Der Dieselmotor 5 ist dabei am gegenüberliegenden Ende des Grundrahmens 14 vom Generator 13 aus gesehen angeordnet und über eine elastische Kupplung 6 sowie einer Schaltkupplung 7 mit der Schwungmasse 9 kuppelbar. Neben einer großen Baulänge verlangt dieser bekannte Aufbau einen hohen Energieaufwand zum Antrieb der großen Schwungmasse 9.

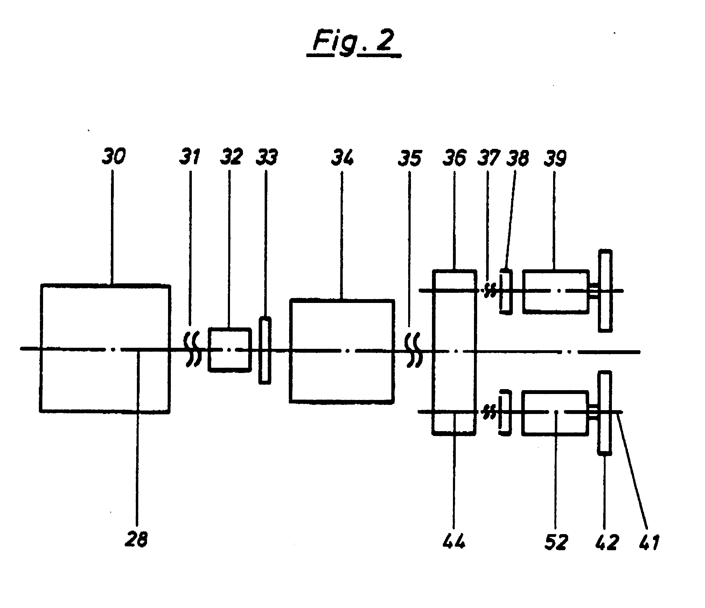

Figur 2 beschreibt ein erfindungsgemäßes Sofortbereitschaftaggregat für eine unterbrechungsfreie Stromversorgung. In einer Draufsicht sind die einzelnen Komponenten des Aggregates vereinfacht dargestellt. Zur Verringerung der Baulänge des gesamten Aggregats ist eine Synchron-Umkehrmaschine 34 vorgesehen bzw. wahlweise ein separater Synchronmotor und Synchrongenerator in einem Gehäuse. Zu einer Seite hin ist die Synchron-Umkehrmaschine 34 über eine elastische Kupplung 35 mit dem Getriebe 36 ständig gekoppelt, welches u. a. als Energiespeicher dient. Achsversetzt parallel zueinander angeordnet besitzt das Getriebe 36 zwei Ausgangswellen 44 auf deren Längsachse die elastische Kupplung 37 und eine als Schaltkupplung 38 dienende regelbare Induktionskupplung sowie ein zum Antrieb des Schwungradsystems 42 dienender Elektromotor 39 angeordnet sind. Auf der gegenüberliegenden Seite der Synchron-Umkehrmaschine 34 ist auf der Längsachse 28 zunächst eine elektromagnetisch betätigbare Schaltkupplung 33 vorgesehen, über die im Bedarfsfall der Hilfsantrieb - der Dieselmotor 30 - mit der Synchron-Umkehrmaschine 34 gekoppelt werden kann. Zur Erzielung eines gedämpften elastischen Antriebs ist zwischen Dieselmotor 30 und der Schaltkupplung 33 eine elastische Kupplung 31 sowie ein Zwischenlager 32 vorgesehen.

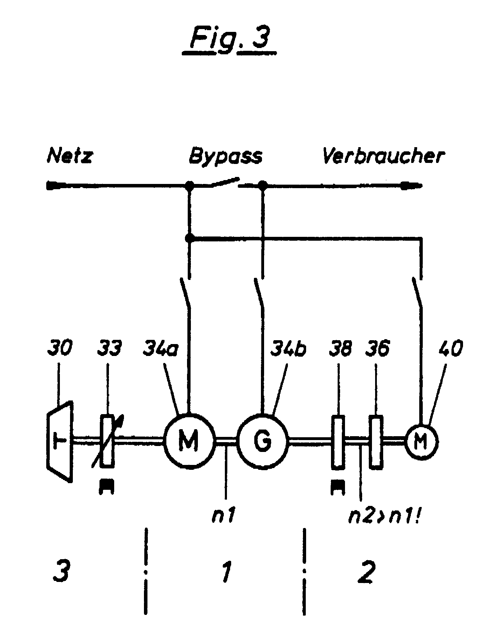

Aus der Figur 3 ist vereinfacht mit Hilfe einer schematischen Darstellung das erfindungsgemäße in drei Systemkomponenten aufteilbare Sofortbereitschaftsaggregat dargestellt. Zur Systemkomponente 1 zählt der mit M bezeichnete Elektromotor 34a sowie der mit G gekennzeichnete Generator bzw. Synchron-Umkehrmaschine 34b, die im Normalfall die Netzversorgung für die Verbraucher sicherstellt. Bei Netzausfall und damit fehlendem Antrieb des Generators 34b erfolgt für eine Überbrückungszeit der Antrieb des Generators 34b über die Systemkomponente 2. Diese besteht aus dem Elektromotor 40, der ein Schwungrad aufweist und mit dem Getriebe 36 gekoppelt ist. Zusammen stellen diese Bauteile einen als Energiespeicher dienendes Schwungradsystem dar, das bedarfsabhängig mit Hilfe der Schaltkupplung 38 zum zeitweisen Antrieb des Generators 34b dienen kann, um einen zu großen Drehzahlabfall der Systemkomponente 1, d.h. des Generators 34b zu vermeiden. Bei einem Netzausfall erfolgt ein automatischer Start des Dieselmotors 30, der bei voller Lastübernahme durch eine elektromagnetisch betätigbare Schaltkupplung 33 den Antrieb des Generators 34b übernehmen kann.

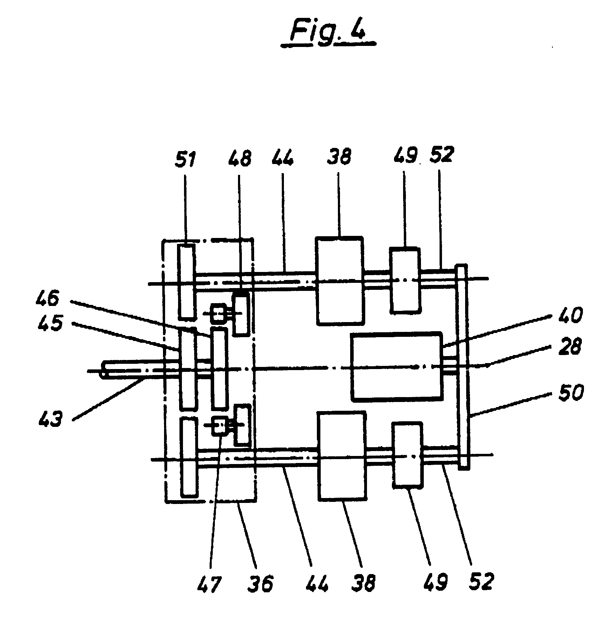

Der Fig. 4 ist ein detaillierter Aufbau der Systemkomponente 2 gemäß Fig. 3 zu entnehmen, die einen möglichen maschinenbaulichen Aufbau darstellt. Der mittig auf der Längsachse 28 an einem Ende der Systemkomponente 2 angeordnete Elektromotor 40 treibt über Keilriemen 50 zwei parallel zur Längsachse 28 angeordnete Verbindungswellen 52 an, auf denen vom Keilriementrieb aus gesehen zunächst das Schwungradsystem 49 und daran anschließend die Schaltkupplung 38 drehfest verbunden ist. Mit Hilfe der Schaltkupplung 38 sind jeweils die Verbindungswelle 52 mit der aus dem Getriebe 36 austretenden Eingangswelle 44 im Bedarfsfall kuppelbar. An dem im Getriebe 36 befindlichen Ende der Eingangswellen 44 sind jeweils drehfest die Zahnräder 51 angebracht, die mit dem zentrisch im Getriebe 36 auf der Eingangswelle 43 befindlichen Zahnrad 45 verzahnt sind. Ein weiteres, ebenfalls drehfest mit der Ausgangswelle 43 verbundenes parallel zum Zahnrad 45 angeordnetes Zahnrad 46 dient zum Antrieb zweier Ritzel 47, die jeweils mit einem nachgeschalteten Schwungradsystem 48 drehfest verbunden sind und aufgrund einer Übersetzung ins Schnelle hochtourig umlaufen. Deutlich erkennbar ist durch diese Darstellung der wenig Bauraum benötigende Aufbau in Folge der Parallelanordnung und des mit hoher Drehzahl umlaufenden Schwungradsystems.

Der Aufbau zeigt weiter einen getrennten Antrieb vom Schwungradsystem 48 und 49. Im Normalbetrieb erfolgt der Antrieb des Zahnrades (45) in dem strichpunktiert gezeichneten Getriebes 36 durch den Antrieb der Synchron-Umkehrmaschine über die Eingangswelle (43). Dagegen wird das Schwungradsystem 49 durch den separat angeordneten Elektromotor 40 ständig angetrieben. Alternativ dazu ist auch eine Zusammenfassung zu einer Einheit von Elektromotor 40 und Schwungradsystem 49 möglich, sowie eine vielfache Anbringung von Schwungradsystemen 49.

Wirkungsweise der neu vorgestellten unterbrechungsfreien Stromversorgung durch ein Sofortbereitschaftsaggregat.

Die Funktionsbeschreibung erfolgt unter Beachtung der Fig. 2.

## Normalbetrieb

Bei dieser Betriebsart ist die Synchron-Umkehrmaschine 34 als Elektromotor mit dem Netz verbunden, die Wellendrehzahl beträgt für ein 50 Hz Aggregat 1500/min. Die zu einer Einheit verbundenen Bauteile, die Elektromotoren 39 mit den Schwungradsystemen 42 besitzen ebenfalls eine Netzversorgung und halten diesen Energiespeicher auf einer Drehzahl von n = 4000/min. Die als Induktionskupplungen ausgelegte Schaltkupplungen 38 gestatten einen Drehzahlunterschied bedingt durch eine geringe Vorerregung der Induktionskupplung zwischen der in einer Flucht angeordneten Ausgangswelle 44 (Drehzahl 2000/min.) und der Verbindungswelle) 52 (Drehzahl 4000/min.). Da bei diesem Betrieb kein Hilfs- bzw. Notantrieb erforderlich ist, steht der Dieselmotor 30, wobei die Schaltkupplung 33 geöffnet ist.

## Netzausfall bzw. Netzstörung

Bei einem Drehzahlabfall unterhalb von 49, 85 Hz der Synchron-Umkehrmaschine 34 werden die Schaltkupplungen 38 erregt, die innerhalb einer Zeit von ca. 100 ms 110% des erforderlichen Nennmomentes aufbauen und so für den erforderlichen Generatorantrieb sorgen. Das im Getriebe 36 integrierte Schwungradsystem 48 hält dabei den Drehzahlabfall der Synchron-Umkehrmaschne 34 in zulässigen Grenzen. Durch den mit dem Schwungradsystem 42 verbundenen Elektromotor 39 wird die Energieversorgung bis zur vollständigen Lastübernahme durch den Dieselmotor 30 gewährleistet. Zur Lastübernahme durch den Dieselmotor 30 ist die Schaltkupplung 33 geschlossen. Vor Lastübernahme durch den Dieselmotor wird die Frequenzgüte durch die elektronisch regelbare als Induktionskupplung wirkende Schaltkupplung 38 erreicht, wodurch eine dynamische Drehzahländerung bei unterschiedlichen Lastzuständen innerhalb eines zulässigen Frequenz-Toleranzbandes von 50 Hz plus minus 1 % gehalten werden kann. Dieses kann bei Vollastbedingungen bis zum Abbau des Energieüberschusses des Schwungradsystems 42 bzw. Erreichung einer Drehzahlübereinstimmung zwischen Synchron-Umkehrmaschine 34 und Schwungradsystem 42 führen. Nach Erreichung der vollen Lastübernahme durch den Dieselmotor 30 werden die Schaltkupplungen 38 abgeschaltet und der Elektromotor 39 sorgt für eine erforderliche Drehzahlerhöhung auf 4000/min. der Schwungradsysteme 42.

## Betrieb nach Netzwiederkehr

Sobald die Netzversorgung wieder hergestellt ist, wird die Synchron-Umkehrmaschine 34 im Generatorbetrieb vom Dieselmotor an das Netz synchronisiert und die Last auf das Netz geschaltet. Nach einer gewissen Nachlaufzeit wird der Dieselmotor 30 abgeschaltet und die Schaltkupplungen 38 erhalten wiederum eine geringe Vorerregung für den Drehzahlunterschied zwischen der Ausgangswelle 44 aus dem Getriebe 36 und der Drehzahl des Elektromotors 39. Die Synchron-Umkehrmaschine 34 arbeitet nun wieder eigenständig und der Elektromotor 39 verbunden mit dem Schwungradsystem 42 stehen somit wieder in Bereitschaft durch die Schaltkupplung 38, mit der kurzfristig der Energiespeicher bestehend aus Elektromotor 39 und Schwungradsystem 42 im Bedarfsfall zugeschaltet werden kann.

## Patentansprüche

1. Elektroaggregat zur Stromversorgung, ausgelegt als Sofort-Bereitschaftsaggregat, unter anderem bestehend aus einem Generator und einem Generatorantriebsmotor (34a) bzw. einer Synchron-Umkehrmaschine (34b) sowie mit einem als Energiespeicher dienenden separat ständig angetriebenen umlaufenden Schwungradsystem, wobei das Schwungradsystem durch eine Schaltkupplung (38) mit dem Generator bzw. mit dem Generatorantriebsmotor verbindbar ist und das Schwungradsystem mit einer höheren Drehzahl als die des Generators bzw. des Generatorantriebsmotors umläuft, *dadurch gekennzeichnet,* daß der Energiespeicher aus mehreren Schwungradsystemen besteht, wobei ein Schwungradsystem (48) mit dem Generator bzw. dem Generatorantriebsmotor verbunden ist und ein weiteres Schwungradsystem (49) separat angetrieben ist und dieses weitere Schwungradsystem (49) über mindestens eine regelbare Schaltkupplung (38) mit dem ersten Schwungradsystem (48) bzw. dem Generator als Generatorantriebsmotor koppelbar ist.

2. Elektroaggregat nach Anspruch 1, dadurch gekennzeichnet, daß als Schaltkupplung (38) eine Induktionskupplung vorgesehen ist.

3. Elektroaggregat nach einem der Ansprüche 1 oder 2, dadurch gekennzeichnet, das die Schaltkupplung (38) als Induktionskupplung ausgebildet ist und im wesentlichen aus zwei radial angeordneten unabhängigen Läufern besteht.

4. Elektroaggregat nach einem der Ansprüche 1 bis 3, dadurch gekennzeichnet, daß die Schaltkupplung (38) mit einer Regelung versehen ist, mit der in Anlehnung an ein vorgegebenes Frequenzband der Energiefluß steuerbar ist.

5. Elektroaggregat nach einem der vorhergehenden Ansprüche 1 bis 4, dadurch gekennzeichnet, daß das Schwungradsystem (48) innerhalb eines Getriebes (36) eingebracht ist.

6. Elektroaggregat nach einem der vorhergehenden Ansprüche 1 bis 5, dadurch gekennzeichnet, daß innerhalb des Getriebes (36) mehrere symmetrisch zueinander stehende jeweils mit gleicher Drehzahl umlaufende einzelne Schwungradsysteme (48) vorgesehen sind.

7. Elektroaggregat nach einem der vorhergehenden Ansprüche 1 bis 6, dadurch gekennzeichnet, daß das Schwungradsystem (49) drehfest auf einer Verbindungswelle (52) befestigt ist und mit einer aus dem Getriebe (36) austretenden Ausgangswelle (44) fluchtet.

8. Elektroaggregat nach einem der vorhergehenden Ansprüche 1 bis 7, dadurch gekennzeichnet, daß der separate Antrieb des Schwungradsystems (49) durch einen Elektromotor (40) über einen Riemen- bzw. Rädertrieb erfolgt.

9. Elektroaggregat nach einem der vorhergehenden Ansprüche 1 bis 8, dadurch gekennzeichnet, daß jedem Schwungradsystem (49) ein eigener Elektromotor (40) zugeordnet ist.

10. Elektroaggregat nach einem der vorhergehenden Ansprüche 1 bis 9, dadurch gekennzeichnet, daµ das Schwungradsystem (49) freiliegend auf der Verbindungswelle (52) befestigt ist.

11. Elektroaggregat nach einem der vorhergehenden Ansprüche 1 bis 10, dadurch gekennzeichnet, daß das Drehzahlverhältnis zwischen Schwungradsystem (48) und Generator bzw. Synchron-Umkehrmaschine (34) 5:1 beträgt und das Drehzahlverhältnis zwischen Schwungradsystem (49) und Generator bzw. Synchron-Umkehrmaschine (34) größer als 2,5:1 ausgelegt ist.

**Claims**

1. A generating set for current supply, in the form of a no-break, stand-by generating set comprising, inter alia, a generator and a generator drive motor (34a) or synchronous reversing machine (34b) together with a separate, continuously-driven revolving flywheel system serving for energy storage, the flywheel system being connectable to the generator or generator drive motor via a clutch (38) and the flywheel system revolving at a higher rotational speed than the generator or generator drive motor, characterised in that the energy storage mechanism comprises a number of flywheel systems with one flywheel system (48) being connected to the generator or generator drive motor and a further flywheel system (49) being driven separately, the further flywheel system (49) being coupled to the first flywheel system (48) or generator as a generator drive motor via at least one controllable clutch (38).

2. A generating set according to Claim 1, characterised in that the clutch (38) is in the form of an induction coupling.

**3.** A generating set according to either Claim 1 or 2,
characterised in that the clutch (38) is in the form of an induction coupling and essentially comprises two radially-arranged independent rotors.

**4.** A generating set according to any one of Claims 1 to 3,
characterised in that the clutch (38) is provided with a control mechanism by means of which the energy flow may be controlled according to a predefined frequency band.

**5.** A generating set according to any one of Claims 1 to 4,
characterised in that the flywheel system (48) is arranged within a gear unit (36).

**6.** A generating set according to any one of Claims 1 to 5,
characterised in that a multiplicity of individual flywheel systems (48) are arranged inside the gear unit (36) symmetrically to each other and rotating with the same speed.

**7.** A generating set according to any one of Claims 1 to 6,
characterised in that the flywheel system (49) is secured in a rotation-fast manner to a connecting shaft (52) and is aligned with an output shaft (44) projecting from the gear unit (36).

**8.** A generating set according to any one of Claims 1 to 7,
characterised in that the separate drive of the flywheel system (49) comprises an electric motor (40) operating via a belt or gears.

**9.** A generating set according to any one of Claims 1 to 8,
characterised in that an individual electric motor (40) is assigned to each flywheel system (49).

**10.** A generating set according to any one of Claims 1 to 9,
characterised in that the flywheel system (49) is secured to the connecting shaft (52) in a free-floating manner.

**11.** A generating set according to any one of Claims 1 to 10,
characterised in that the speed ratio between the flywheel system (48) and the generator or synchronous reversing machine (34) is 5:1 and that the speed ratio between the flywheel system (49) and the generator or synchronous reversing machine (34) is greater than 2.5:1.

**Revendications**

**1.** Groupe électrique d'alimentation de courant, étudié comme groupe de secours rapide, se composant entre autre d'un générateur et d'un moteur de commande du générateur (34a) ou d'un moteur réversible synchrone (34b) ainsi qu'avec une système de volant servant d'accumulateur d'énergie tournant continuellement avec commande séparée, dans lequel le système de volant peut être relié par un embrayage (38) au générateur ou au moteur d'entraînement du générateur et dans lequel le volant tourne à une vitesse plus grande que celle du générateur ou du moteur d'entraînement du générateur, caractérisé en ce que l'accumulateur d'énergie se compose de plusieurs systèmes de volant parmi lesquels, un des dispositifs de volant (48) est lié au générateur ou au moteur d'entraînement du générateur et un autre système de volant (49) est commandé séparément et ce deuxième système de volant (49) peut être accouplé par au moins un embrayage (38) réglable au premier dispositif de volant (48) en tant que moteur d'entraînement du générateur.

**2.** Groupe électrique selon la revendication 1, caractérisé en ce que l'embrayage (38) est un accouplement à induction.

**3.** Groupe électrique selon une des revendications 1 ou 2, caractérisé en ce que l'embrayage (38) est réalisé en accouplement à induction et se compose essentiellement de deux induits indépendants disposés radialement.

**4.** Groupe électrique selon une des revendications 1 à 3, caractérisé en ce que l'embrayage (38) est muni d'une régulation, avec laquelle le flux énergétique peut être dirigé en appui sur une bande de fréquence prédéfinie.

**5.** Groupe électrique selon une des revendications précédentes 1 à 4, caractérisé en ce que le système de volant (48) est mis en place à l'intérieur d'une transmission (36).

**6.** Groupe électrique selon une des revendications précédentes 1 à 5, caractérisé en ce que sont prévus à l'intérieur de la transmission (36) plusieurs systèmes de volants individuels, disposés symétriquement les uns par rapport aux autres, tournant respectivement à la même vitesse.

7. Groupe électrique selon une des revendications précédentes 1 à 6, caractérisé en ce que le système de volant (49) est fixé solidaire en rotation sur un arbre de transmission (52) et est aligné avec un arbre (44) sortant de la transmission (36).

8. Groupe électrique selon une des revendications précédentes 1 à 7, caractérisé en ce que l'entraînement séparé du système de volant (49) est fait par un moteur électrique (40) par l'intermédiaire d'une commande par courroie ou roues dentées.

9. Groupe électrique selon une des revendications précédentes 1 à 8, caractérisé en ce qu'à chaque système de volant (49) est associé un propre moteur électrique (40).

10. Groupe électrique selon une des revendications précédentes 1 à 9, caractérisé en ce que le système de volant (49) est fixé de façon libre sur l'arbre de transmission (52).

11. Groupe électrique selon une des revendications précédentes 1 à 10, caractérisé en ce que le rapport de la vitesse angulaire entre le système de volant (49) et le générateur ou le moteur réversible synchrone (34) est de 5 : 1 et le rapport de la vitesse angulaire entre le système de volant (49) et le générateur ou moteur réversible synchrone (34) est dimensionné supérieur à 2,5 : 1.

# Fig. 1

## Fig. 2

## Fig. 3

Netz                    Bypass              Verbraucher

30    33    34a              34b    38    36              40

T    M    G          M

n1                    n2>n1!

3          1          2

## Fig. 4